# EUROPÄISCHE PATENTSCHRIFT

(11) **EP 2 443 417 B1**
(45) Veröffentlichungstag und Bekanntmachung des Hinweises auf die Patenterteilung: **10.03.2021**
(21) Anmeldenummer: 10726866.6
(22) Anmeldetag: 16.06.2010
(51) Int. Cl.: G01B 15/04, G01F 23/284

(54) **VERFAHREN UND VORRICHTUNG ZUR BERECHNUNG EINER OBERFLÄCHE EINES FÜLLGUTS EINES HOCHOFENS**
METHOD AND DEVICE FOR CALCULATING A SURFACE OF A FILLING MATERIAL OF A FURNANCE
PROCÉDÉ ET DISPOSITIF DE CALCUL D'UNE SURFACE D'UN PRODUIT DE REMPLISSAGE D'UN HAUT-FOURNEAU

(30) Priorität: 17.06.2009 AT 9352009
(43) Veröffentlichungstag der Anmeldung: 25.04.2012
(73) Patentinhaber: Voestalpine Stahl GmbH, 4020 Linz (AT)
(72) Erfinder: SCHUSTER, Stefan, A-4470 Enns (AT); OSSBERGER, Gerhard, A-4060 Leonding (AT); FEILMAYR, Christoph, A-4020 Linz (AT); BÜRGLER, Thomas, A-4221 Steyregg (AT); LACKNER, Bernhard, A -4663 Laakirchen (AT); SCHÖLLHAMMER ,Herbert, A-4264 Grünbach (AT); STADLER, Peter, A-4040 Linz (AT)
(86) Internationale Anmeldenummer: PCT/AT2010/000219
(87) Internationale Veröffentlichungsnummer: WO 2010/144936

(56) Entgegenhaltungen:
- EP-A2- 1 701 142
- WO-A2-01/60718
- US-A1- 2004 119 636
- US-A1- 2007 279 309

## Beschreibung

### Technisches Gebiet

Die Erfindung betrifft ein Verfahren und eine Vorrichtung zur Berechnung einer Oberfläche eines Füllguts eines Hochofens, entsprechend der Definition der Ansprüche 1 und 8.

### Stand der Technik

Zur Messung der Oberfläche eines Füllstands bzw. des Füllstands eines Behälters ist aus dem Stand der Technik eine Radarvorrichtung bekannt (EP1701142A2), bei der auf das zu messende Schüttgut mehrere Sende- und Empfangsantennen zur Bestrahlung des Schüttguts mit Radarsignalen gerichtet sind. Zu diesem Zweck werden die Antennen über nahezu die gesamte Erstreckung des Schüttguts verteilt angeordnet, um so die Oberflächenform des Schuttguts anhand eines mehrfach empfangenen Radarsignals sowie unter Zuhilfenahme eines geometrischen Modells des Schüttkegels des Füllguts berechnen zu können. Zwar kann mit einer vergleichsweise verteilten Anordnung von Antennen eine erhöhe Anzahl an Teilbereichen der Oberfläche abgetastet werden, um so eine genaue Darstellung der Oberflächenform des Schuttguts ermöglichen zu können, von Nachteil ist jedoch, dass die Installation einer derartig erstreckten Radarvorrichtung einen vergleichsweise hohen konstruktiven Aufwand bedarf. Nachteilig kommt weiter hinzu, dass diese breitflächig verteilten Antennen einer vergrößerten Beschädigungsgefahr ausgesetzt sind, was unter anderem zu keinen hohen Standzeiten derartiger Vorrichtungen führen kann. Außerdem erhöht sich nachteilig durch die breite Anordnung die Dämpfung aufgrund der langen Hochfrequenzverbindungsleitungen.

Desweiteren ist aus der DE2129290A1 eine Radarvorrichtung zur Messung des Füllstands an Schüttgut eines Hochofens bekannt. Auch hier werden verteilt über die Erstreckung des Schüttguts mehrere die Ofenwand durchbrechende Antennen vorgesehen. Die DE2129290A1 weist daher auch dieselben, aus der EP1701142A2 bekannten Probleme auf, nämlich sowohl einen vergleichsweise hohen konstruktiven Aufwand als auch eine vergleichsweise geringe Standzeit. Insbesondere kommt hier noch hinzu, dass die Standzeit durch die Widrigkeiten innerhalb des Ofens negativ beeinträchtigt wird, so dass die DE2129290A1 zur Verbesserung dieser Umstände eine Wasserkühlung sowie eine Oberflächenspülung der jeweiligen Hornantennen vorschlägt, was zudem vergleichsweise konstruktiv aufwendig ist.

Eine weitere aus der DE20122745U1 bekannte Vorrichtung mit einer verschwenkbaren Antenneneinrichtung offenbart einen kompakten Aufbau, doch müssen nachteilig mechanische Mittel zum Verschwenken vorgesehen werden, die unter widrigen Umständen besonders anfällig sind, so dass derartigen Vorrichtungen der Einsatz bei einem Hochofen versperrt bleibt.

Eine andere Vorrichtung ist aus der DE10149851A1 bekannt, bei der mit Hilfe einer Antenneneinrichtung wenigstens zwei gebündelte Radarsignale auf das Füllgut gesendet werden, um damit zwei unterschiedliche Teilbereiche des Füllguts ausleuchten zu können. Zu diesem Zweck sind mehrere Patchantennen in einem gemeinsamen Gehäuse angeordnet. Damit kann zwar gegenüber der DE20122745U1 eine mechanische Verstellung der Antenneneinrichtung vermieden werden, da anhand der unterschiedlich ausgeleuchteten Teilbereiche die Oberfläche des Füllguts durch Schätzung berechnet werden kann. Nachteilig bei dieser Vorrichtung ist jedoch die durch "digital beam forming" vergleichsweise geringe Anzahl an ausleuchtbaren Teilbereichen, so dass mit einer vergleichsweise ungenauen Darstellung der Oberfläche des Füllguts gerechnet werden muss.

Aus der WO 01/60718 A2 ist eine Vorrichtung mit Schüttgutmessgeräte in einem Instrumentengehäuse bekannt. Das Instrumentengehäuse verfügt über mindestens einen Entfernungsmesssensor, beispielsweise einen Abtastlaser, um die Konturen der oberen Oberfläche des Schüttguts zb in einem Silo zu messen.

### Darstellung der Erfindung

Die Erfindung hat sich daher die Aufgabe gestellt, eine Vorrichtung und ein Verfahren der eingangs geschilderten Art derart zu verbessern, dass trotz geringen Abmessungen der Antenneneinrichtung eine vergleichsweise hohe Genauigkeit in Berechnung der Oberfläche des Füllguts eines Behälters ermöglicht werden kann, wobei der besagte Behälter ein Hochofen ist.

Diese Aufgabe wird durch ein Verfahren mit den Merkmalen des unabhängigen Anspruchs 1 sowie durch eine Vorrichtung mit den Merkmalen des unabhängigen Anspruchs 8 gelöst. Vorteilhafte Weiterbildungen ergeben sich aus den abhängigen Ansprüchen.

Die Erfindung löst die gestellte Aufgabe hinsichtlich des Verfahrens dadurch, dass mit der, über die Antennen eine synthetische Apertur ausbildenden Antenneneinrichtung elektromagnetische Signale gesendet werden, die sich je im Wesentlichen an allen Teilbereichen der zu berechnenden Oberfläche des Füllguts reflektieren. Werden mit der Antenneneinrichtung elektromagnetische Signale gesendet, die sich je im Wesentlichen an allen Teilbereichen der zu berechnenden Oberfläche des Füllguts reflektieren, dann kann es möglich werden, dass mit jedem Signal die gesamt zu berechnende Oberfläche des Füllguts ausgeleuchtet werden kann. Aufgrund von Reflexionen an den Behälterwänden kommt es jedoch zu erheblichen Störeinflüssen in den von den gesendeten und empfangen elektromagnetischen Signalen abhängigen Daten, welche Einflüsse überraschend mit einer, eine synthetische Apertur ausbildenden Antenneneinrichtung derart vermindert werden können, dass trotz der vergleichsweise geringen Abmessung der Antenneneinrichtung eine vergleichsweise hohe Genauigkeit in der Berechnung der Oberfläche des Füllguts eines Behälters ermöglicht werden kann. Zur Berechnung der Teilflächen aus den Daten können bekannte Algorithmen verwendet werden. Vorstellbar sind "beamfomer" Algorithmen, bei denen aus den Daten jene elektromagnetischen Signale gefiltert werden, die vom Teilbereich der zu bestimmenden Oberfläche stammen. Dies kann beispielsweise unter Zuhilfenahme von Raumwinkel zwischen den Antennen und der jeweiligen Teilfläche sowie den bekannten konstruktiven Zusammenhängen, beispielsweise der Position der jeweiligen Antennen, erfolgen. Andere Algorithmen zu Bestimmung sind denkbar, beispielsweise CAPON, RELAX oder MUSIC Algorithmen. Anhand des so gewonnenen Signals bzw. Richtungssignals kann nun unter Verwendung konventioneller Algorithmen zur Abstandsmessung die Entfernung der Teilfläche zur Antenneneinrichtung berechnet werden. Bekanntermaßen wird bei der Abstandsmessung ein Mittelwert der Entfernung der betrachteten Teilfläche ermittelt. Da nun für jede Teilfläche nur an den Raumwinkeln Veränderungen vorgenommen werden muss, kann so auf einfache Weise eine hohe Auflösung der Oberfläche des Füllguts ermöglicht, was erfindungsgemäß auch eine dreidimensionale Darstellung des Füllguts erlaubt, ohne dass die Antenneneinrichtung dafür mechanisch verschwenkt werden muss. Damit ist ein beispielsweise gegenüber den Widrigkeiten eines Hochofens robustes und störsicheres Verfahren geschaffen, was gegenüber dem Stand der Technik vergleichsweise hohe Standzeiten gewährleisten kann. Außerdem ist selbstverständlich, dass im Sinne eines zusammenhängenden Füllguts auch mehrere bereichsweise in einem Behälter oder Raum verteilte Gegenstände verstanden werden können.

Wird die Oberfläche des Füllguts im Wesentlichen aus Teilflächen berechnet, die aus wenigstens den Daten unter Berücksichtigung wenigstens einer, zwischen den Teilflächen verschiedenen Raumwinkelgröße bestimmt werden, dann kann eine genaue Darstellung der Oberfläche des Füllguts geschaffen werden. Lücken zwischen den Teilflächen können so weitgehend vermieden werden.

Werden zur Berechnung der Oberfläche des Füllguts elektromagnetische Signale von allen Antennen verwendet, dann kann es möglich werden, dass selbst bei geringen Signal-Rauschabständen aufgrund einer erhöhten Anzahl an Empfangsantennen eine vergleichsweise hohe Genauigkeit in der Berechnung der Oberfläche ermöglicht werden.

Um in einem Zeitintervall des Sendens und Empfangens eine synthetische Apertur schaffen zu können, können zumindest teilweise orthogonal verschiedene elektromagnetische Signale gesendet werden, was ein vergleichsweise schnelles Verfahren zur Berechnung einer Oberfläche eines Füllguts eines Behälters schaffen kann. Das Verfahren kann auch durch ein mehrmaliges Senden von gleichen elektromagnetischen Signalen ermöglicht werden, um damit durch mehrere Zeitintervalle des Sendens und Empfangens eine synthetische Apertur zu schaffen.

Werden für die Berechnung der Oberfläche des Füllguts die Zwischenflächen zwischen den berechneten Teilflächen anhand der Daten zu den berechneten Teilflächen interpoliert, dann kann mit einer verminderten Berechnung an Teilflächen aus den Daten, um damit das Verfahren in der Rechenzeit zu beschleunigen, trotzdem eine hohe Genauigkeit ermöglicht werden.

Um Messrauschen unterdrücken zu können, kann vorgesehen sein, dass unter Berücksichtigung bekannter physikalischer Eigenschaften des Füllguts die von den gesendeten und empfangen elektromagnetischen Signalen abhängigen Daten geglättet werden. Derartige physikalische Eigenschaften des Füllguts kann beispielsweise eine maximale Steigung der Oberfläche des Füllguts sein.

Senden und/oder Empfangen die Antennen durch eine feuerfeste, insbesondere gemeinsame Gehäusewand, dann kann auch bei Verwendung der Vorrichtung unter widrigen Verfahrensbedingungen, die beispielsweise in einem Hochofen vorherrschen können, ein standfestes Verfahren geschaffen werden. Besonders vorteilhaft hat sich herausgestellt, wenn eine Antenneneinrichtung mit mehreren, in einem gemeinsamen Gehäuse angeordneten Antennen, insbesondere Radarantennen, zur Berechnung einer Oberfläche eines Füllguts eines Behälters verwendet wird, wobei die Antennen der Antenneneinrichtung eine synthetische Apertur zur Verbesserung der Winkelauflösung und Unterdrückung von Störsignalen ausbilden.

Insbesondere hat sich eine Verwendung ausgezeichnet, wenn für die Antennen ein Array an Antennen, insbesondere in MIMO, SIMO oder MISO Anordnung, zur Bildung einer synthetischen Apertur bei einem Hochofen zur Berechnung der Oberfläche des Füllstands eines Hochofens verwendet wird.

Die Erfindung löst die gestellte Aufgabe hinsichtlich der Vorrichtung dadurch, dass die Antenneneinrichtung sich je im wesentlichen an allen Teilbereichen der zu bestimmenden Füllgutoberfläche reflektierende, elektromagnetische Signale sendet, wobei die Vorrichtung eine mit den Antennen verbundene Steuereinrichtung aufweist, die die Antennen zur Bildung einer synthetischen Apertur ansteuert.

Sendet die Antenneneinrichtung elektromagnetische Signale, die sich je im wesentlichen an allen Teilbereichen der zu bestimmenden Füllgutoberfläche reflektieren, dann wird es zunächst möglich, mit einem Signal die gesamte auszuleuchtende Füllgutoberfläche abzutasten und damit trotzdem geringsten konstruktiven Abmessungen zu genügen, um so die Antennen in einem gemeinsamen Gehäuse vorsehen zu können. Außerdem ist es weiter nicht notwendig, die Antenneneinrichtung mechanisch zu verschwenken, um so alle Teilbereiche ausleuchten zu können, so dass gerade bei einer Verwendung der Vorrichtung in einem Hochofen eine besonders robuste und standfeste Vorrichtung geschaffen werden kann. Nachteilig ist jedoch, dass unter anderem wegen der Vielzahl an Reflexionen durch die Behälterwand, es praktisch unmöglich werden kann, aus den empfangenen elektromagnetischen Signalen die Oberfläche des Füllguts genau berechnen zu können. Aus diesem Grunde schlägt die Erfindung weiter vor, dass die Vorrichtung eine mit den Antennen verbundene Steuereinrichtung aufweist, die die Antennen zur Bildung einer synthetischen Apertur ansteuert. Damit kann erfindungsgemäß erreicht werden, dass zur Berechnung der Oberfläche Daten zur Verfügung stehen, die zu einer verbesserten Winkelauflösung und verbesserten Unterdrückung von Störsignalen führen, so dass eine genaue dreidimensionale Oberflächendarstellung von der Recheneinheit berechnet werden kann. So kann dafür beispielsweise die eine Antenne bei einer Messung als Sende- und Empfangsantenne und bei der nächsten Messung als reine Sendeantenne dienen, wohingegen die andere Antenne mindestens bei der nächsten Messung dann die Funktion einer Empfangsantenne einnimmt. Andere Verschaltungen der Antennen sind vorstellbar. Insbesondere auch eine Steuerung, bei der mit orthogonal verschiedenen Signalen in einem Sende- und Empfangsschritt eine synthetische Apertur der Antenneneinrichtung geschaffen werden kann. Der technische Effekt im Allgemeinen dabei ist, dass somit die Daten der beiden Messung eine Art Positionsänderung der Antenneneinrichtung berücksichtigen, was beispielsweise von einem Radar mit synthetischer Apertur bekannt ist. Damit kann eine Apertur einer gegenüber dem tatsächlichen Abstand der Einzelantennen scheinbar vergrößerten Antenne bzw. Antenneneinheit synthetisiert werden, um so trotz einer konstruktiv kleinen Antenneneinrichtung für eine hohe Genauigkeit der Berechnung der Oberfläche sorgen zu können. Für diese hohe Genauigkeit ist es jedoch nicht zwangsweise notwendig, dass aus den elektromagnetischen Signalen unter Berücksichtigung der Antennenabstände die absoluten Abstände zwischen Antenneneinrichtung und den Teilfläche Füllgutoberfläche berechnet wird, denn es kann ausreichen den relativen Abstand zu berechnen, um dann über Verhältnisse die Oberfläche des Füllguts berechnen bzw. dreidimensional darstellen zu können. Hinzu kommt, dass selbst bei geringen Signal-Rauschabständen aufgrund der erhöhten Anzahl an Empfangsantennen der Effekt des Gruppengewinns für genaue Messergebnisse verwendet werden, so dass erfindungsgemäß die Vorteile eines MIMO Antennenarrays mit den Vorteilen einer synthetischen Apertur verbunden werden können, um so eine störsichere und robuste Vorrichtung zur Bestimmung der Oberfläche eines Füllguts eines Behälters schaffen zu können, wobei sich zusätzlich die Vorrichtung durch deren Kompaktheit und konstruktiven Einfachheit auszeichnet.

Weist die Recheneinheit eine Rasterschaltung auf, die mit der Rechenschaltung der Recheneinheit zur Veränderung wenigstens einer Raumwinkelgröße verbindet, wobei die Rechenschaltung in Abhängigkeit von Raumwinkeln aus den vom elektromagnetischen Signal abhängigen Daten Abstandsdaten einer Teilfläche der Oberfläche des Füllguts berechnet, dann kann auf einfache Weise in der Art eines Rasters jede Teilfläche berechnet und zu einem dreidimensionalen Bild der Oberfläche des Füllguts zusammengesetzt werden.

Um Messrauschen unterdrücken zu können, kann vorgesehen sein, dass die Recheneinheit einen Speicher aufweist, der mit der Rechenschaltung zur Übertragung von Daten über die Eigenschaften des Füllguts verbindet, wobei die Rechenschaltung in Abhängigkeit der Speicherdaten die vom empfangen elektromagnetischen Signal abhängigen Daten glättet. Zu diesem Zweck können beispielsweise Vorkenntnisse zu maximalen Steigungen des schüttfähigen Füllguts herangezogen werden, was beispielsweise nicht unwesentlich von der Körnung des Füllguts abhängig ist, um so die Genauigkeit der Berechnung der Oberfläche zu verbessern.

Weist das Gehäuse eine vor den Antennen vorgesehene, feuerfeste Schicht auf, durch die die Antennen senden und/oder empfangen, dann kann es möglich werden, dass mit konstruktiver Einfachheit die Antennen gegenüber den Widrigkeiten eines Hochofens geschützt werden können. Beispielsweise kann eine diese Schicht ausbildende feuerfeste Gehäuseseite die Antennen so gegenüber vergleichsweise hohen Temperaturbelastungen schützen, so dass hohe Standzeiten sowie auch nach längeren Betriebszeiten stets genaue Messergebnisse ermöglicht werden. Unter feuerfeste Materialien können insbesondere Werkstoffe verstanden werden, die eine Einsatztemperatur selbst über 600 °C standhalten können. Außerdem wird es durch die Erfindung möglich, dass eine verminderte Anzahl an Öffnungen in eine Ofenwand bzw. in einen Ofendeckel eingebracht werden muss, weil mit einer Vorrichtung im wesentlichen die gesamte Oberfläche des Füllguts berechnet werden kann, was den konstruktiven Aufwand vermindert bzw. eine Beeinträchtigung der Stabilität des Hochofens vermeiden kann. Hinzu kommt, dass die Vorrichtung mit einem gemeinsamen Gehäuse auch einfach wartbar ist.

Um die Vorrichtung auch bei widrigen Umständen, wie diese in einem Hochofen vorherrschen, einsetzen zu können, kann vorgesehen sein, dass das Gehäuse eine vor den Antennen vorgesehene, feuerfeste Schicht, insbesondere Gehäuseseite, aufweist, und durch die die Antennen senden und/oder empfangen. Insbesondere hat sich Calciumsulfat oder Keramik als vorteilhaft herausgestellt, weil dieses neben einer reflexionsarmen bzw. radartransparenten Eigenschaft auch eine geringe Dämpfung der Radarsignale aufweisen.

Ist im Gehäuse ein Array an Antennen vorgesehen, dann kann die Apertur noch weiter erhöht werden. Auf konstruktiv einfache Weise kann hierfür beispielsweise ein MIMO, SIMO oder MISO Antennenarray verwendet werden. Insbesondere kann so durch eine erhöhte Anzahl an Antennen geschaffen werden, dass man sich im Nahfeld des Arrays befindet, um damit die Genauigkeit der Messung zu erhöhen. Zu diesem Zweck können die Antennen zueinander lediglich derart auf Abstand angeordnet sein, dass eine synthetische Apertur zur Nahfeldberechnung ermöglicht werden kann. Damit kann beispielsweise die Auswertung bzw. auch die Winkelauflösung verbessert werden. Außerdem kann mit dem Vorsehen von mehreren Antennen eine gegenüber Störeinflüssen robuste Vorrichtung geschaffen werden, weil durch die erhöhte Anzahl an virtuellen Antennen eine Verbesserung der Signal-Rauschabstände durch Mittelungseffekte eintreten kann.

Sind mindestens zwei unterschiedliche Abstandsweiten zwischen den Antennen vorgesehen, dann kann eine höhere Apertur der Antenneneinrichtung geschaffen werden, weil Überlappungen bei der Generierung der synthetischen Apertur zwischen den relevanten Antennen vermindert werden können. Erhöhte Genauigkeiten in der Berechnung der Oberfläche des Füllguts können so ermöglicht werden.

Weisen wenigstens zwei Antennen zueinander geneigte Hauptabstrahlrichtungen auf, dann kann sowohl die Abstrahlcharakteristik der Radarvorrichtung eingestellt sowie ein verbesserter Empfang von Radarsignalen zur Erhöhung der Winkelauflösung verwendet werden. Außerdem kann durch die Anordnung der Antennen eine Ausblendung von Störsignalen (beispielsweise von Reflexionen der Behälterwand) ermöglicht werden, in dem diese Reflexionen von den Antennen nicht empfangen werden können.

Weist das Gehäuse eine Kühleinrichtung auf, so kann zusätzlich zur Wärmeisolation durch die feuerfeste Gehäuseseite auch für eine Kühlung der Antennen im Gehäuse gesorgt werden. Damit kann nicht nur ein standfester Betrieb der Radarvorrichtung erreicht, sondern es können damit auch temperaturbedingte Messabweichungen vermindert werden.

Weist das Gehäuse eine Reinigungseinrichtung auf, die mit wenigstens einer Düse auf die Außenseite der feuerfesten Gehäuseseite gerichtet ist, dann können Anbackungen auf der Gehäuseseite auf einfache Weise entfernt werden, ohne dass das Gehäuse zu Reinigungszwecken vom Ofen demontiert werden muss. Solche nun durch Anbackungen bedingte negative Einflüsse auf die Messung des Füllstands sind so hin zu vermeiden, sodass im Gegensatz zum Stand der Technik für eine gleichbleibende und damit genaue Messung der Füllstandmenge, und zwar auch bei längeren Betriebszeiten des Radars, gesorgt werden kann.

Das Gehäuse kann außen wenigstens teilweise eine Anbackung abweisende Beschichtung aufweisen, um damit eine vergleichsweise hohe Standfestigkeit der Vorrichtung gegenüber widrigen Umgebungseinflüssen gewährleisten zu können. Vorstellbar ist beispielsweise eine keramische Antihaftbeschichtung, die trotz hohen Umgebungstemperaturen wirkungsvoll Anbackungen reduzieren bzw. vermeiden können. Solch eine Beschichtung kann auch Nanopartikel zur Verbesserung der Antihaftbeschichtung gegenüber Anbackungen und/oder Verzunderungen aufweisen.

Besonders vorteilhaft ist, wenn ein Hochofen mit einem Füllgut aufnehmenden Ofengehäuse und mit einer in eine Öffnung des Ofengehäuses eine eingesetzte Vorrichtung zur Berechnung der Oberfläche des Füllguts aufweist.

### Kurze Beschreibung der Zeichnung

In den Figuren ist der Erfindungsgegenstand beispielsweise anhand mehrerer Ausführungsbeispiele dargestellt. Es zeigen
- Fig. 1: eine teilweise aufgerissene Seitenansicht auf einen Behälter mit einer Vorrichtung zur Berechnung einer Oberfläche eines Füllguts eines Behälters,
- Fig. 2: eine vergrößerte und abgerissen Seitenansicht der Fig. 1 mit einer aufgerissenen Vorrichtung nach einem ersten Ausführungsbeispiel,
- Fig. 3: eine abgerissene Draufsicht nach III-III der Fig. 2 auf ein Array an Antennen,
- Fig. 4: eine Seitenansicht auf eine alternative Anordnung der im Array angeordneten Antennen nach Fig. 3,
- Fig. 5: eine vergrößerte und abgerissen Seitenansicht der Fig. 1 mit einer aufgerissenen Vorrichtung nach einem zweiten Ausführungsbeispiel,
- Fig. 6: eine vergrößerte und abgerissen Seitenansicht der Fig. 1 mit einer aufgerissenen Vorrichtung nach einem dritten Ausführungsbeispiel,
- Fig. 7: eine vergrößerte und abgerissen Seitenansicht der Fig. 1 mit einer aufgerissenen Vorrichtung nach einem vierten Ausführungsbeispiel,
- Fig. 8: eine schematische Ansicht der Vorrichtungen nach den Fig. 2, 5, 6, und 7 und
- Fig. 9: eine schematische Darstellung der Rasterung der Oberfläche des Füllguts in Teilflächen.

### Weg zur Ausführung der Erfindung

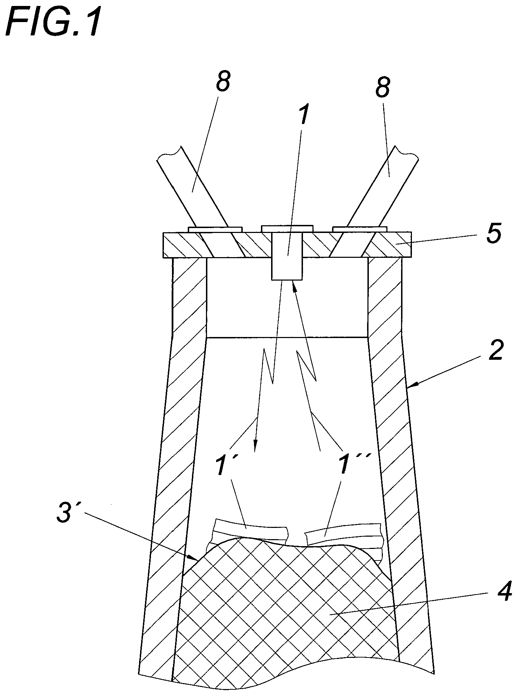

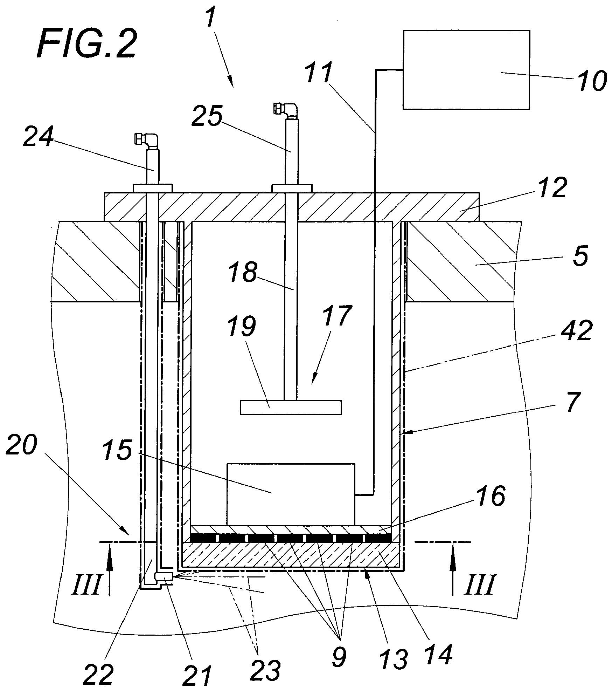

Nach Fig. 1 wird beispielsweise eine Anordnung einer Vorrichtung 1 zum Senden von als Radarsignale 1' bzw. 1" ausgebildete elektromagnetische Signalen in einem als Hochofen ausgeführten Behälter 2 gezeigt. Der Behälter 2 weist einen Füllstand 3 an Füllgut 4 bzw. Möller auf. Um nun die Oberfläche 3' des Füllguts 4 und/oder den Füllstand 3 berechnen zu können, ist im Ofendeckel 5 eine Öffnung 6 vorgesehen, durch die die Vorrichtung 1 in das Innere des Behälters 2 mit seinem Gehäuse 7 ragt, was der Fig. 2 besser entnommen werden kann. Auf Grundlage der von der auf die in Fig. 1 verwendete Vorrichtung 1 gesendeten und empfangen Radarsignalen 1' bzw. 1", die unter anderem auch vom Möller 4 reflektiert werden, kann nun die Berechnung durchgeführt werden. Weiters weist der Behälter 2 Leitungen 8 für ein nicht näher dargestelltes Gichtgas auf.

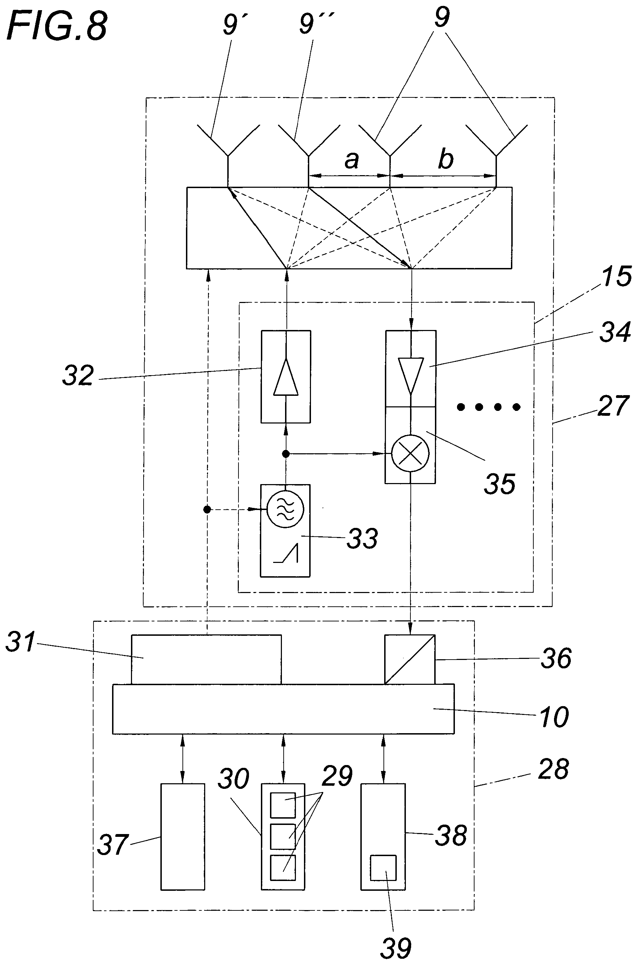

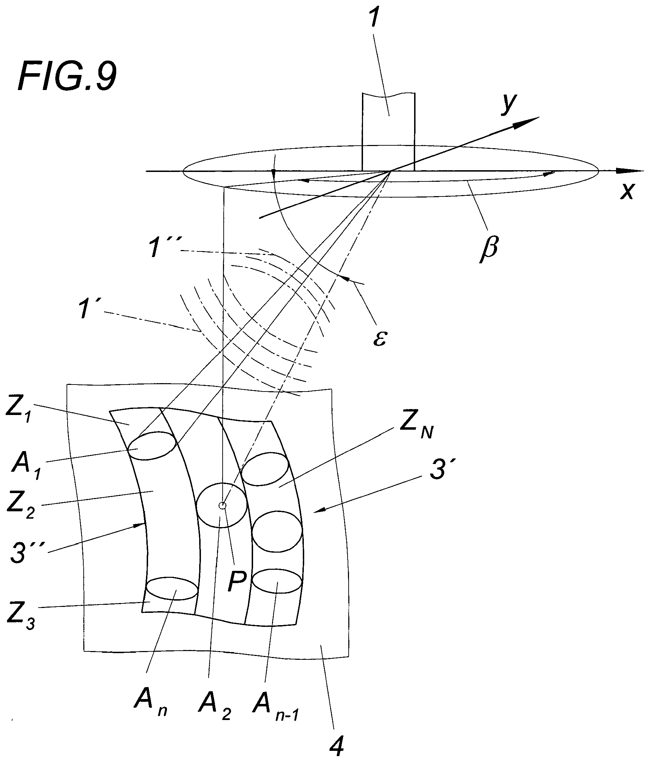

Gemäß Fig. 2 wird eine vergrößerte Seitensicht auf eine aufgerissene Vorrichtung 1 nach einem ersten Ausführungsbeispiel beispielsweise gezeigt. Die auf die in Fig. 1 dargestellte Vorrichtung 1 weist mehrere Antennen 9 auf, die zum Senden und zum Empfangen von Radarsignalen 1', 1" ausgebildet sind. Des Weiteren ist eine Recheneinheit 10 vorgesehen, die Daten über eine Datenverbindung 11 von den Antennen 9 empfängt, wobei die Daten sich auf den gesendeten und empfangenen Radarsignalen 1', 1" begründen bzw. davon abhängig sind. Um für kompakte Konstruktionsverhältnisse zu sorgen, sind die Antennen 9 eng nebeneinander anordnet was bei einem Senden von Radarsignalen 1' auf die gesamt zu berechnende Oberfläche 3' des Füllguts 4 für erhebliche Reflexionsprobleme durch die Behälterseitenwand sorgt. Um diese Probleme vermeiden zu können wird erfindungsgemäße eine besondere Konstruktion bzw. ein besonderes Verfahren verwendet, was in der Figurenbeschreibung nach Fig. 8 und 9 näher erläutert wird. Vorteilhafter Weise können so die Antennen 9 in einem gemeinsamen Gehäuse 7 vorgesehen werden, welches Gehäuse 7 dann über einen Flansch 12 am Ofendeckel 5 befestigt werden kann. Außerdem können so die Antennen 9 über ein gemeinsames Gehäuse 7 auf einfache konstruktive Weise gegenüber Hitze- und Staubbelastungen geschützt werden, was dadurch verbessert werden kann, wenn das in den Behälter 2 vorstehende Gehäuse 7 eine vor den Antennen 9 angeordnete feuerfeste Schicht in Form einer Gehäuseseite 13 aufweist. Solch eine feuerfeste Gehäuseseite 13 kann beispielsweise ein feuerfestes Plattenmaterial 14 oder eine feuerfeste Beschichtung darstellen. Wie in Fig. 2 dargestellt, ist auf der einen Stirnseite des zylinderförmigen Gehäusemantels ein feuerfestes Plattenmaterial 14 aufgesetzt, was die feuerfeste Gehäuseseite 13 schafft. Das Material 14 der Gehäuseseite 13 muss dann nur derart gewählt werden, dass die dahinter vorgesehenen Antennen 9 auf einfache Weise durch diese feuerfeste Gehäuseseite 13 senden bzw. empfangen können.

Um nun die Antennen 9 je nach gewählter Sende- bzw. Empfangsfunktion betreiben zu können, ist eine Ansteuerschaltung 15 vorgesehen, die mit den Antennen elektrisch verbunden ist. Eine derartige Ansteuerschaltung 15 wird oftmals auch als Radarmodul bezeichnet. Zu diesem Zweck sind die als Patchantennen ausgeführten Antennen 9 auf einer Leitungsträger 16 vorgesehen, über welchen Leitungsträger 16 eine nicht näher dargestellte elektrische Verbindung zwischen der Ansteuerschaltung 15 und den Antennen 9 besteht. In dem nach Fig. 2 dargestellten Ausführungsbeispiel zu einer Radarvorrichtung 1 ist die Recheneinheit 10 außerhalb des Gehäuses 7 vorgesehen, um damit die Recheneinheit 10 gegenüber eventuellen Hitzebelastungen zu schützen. Um verminderte Kopplungs- und Dämpfungseffekte zwischen der Ansteuerschaltung 15 bzw. der Elektronik und den Antennen 9 zu ermöglichen, ist gemäß der Radarvorrichtung 1 nach Fig. 2 die Ansteuerschaltung 15 nahe an den Patchantennen angeordnet.

Für eine geringe bzw. gleichbleibende Temperaturbelastung sorgt eine in Fig. 2 schematisch dargestellte Kühlvorrichtung 17, die mit einer Zu- und/oder Ableitung 18 und einem Spühlkopf 29 den vom Gehäuse 7 umfassten Raum mit nicht näher dargestellten Kühlmittel, insbesondere Kühlflüssigkeit, beaufschlagen kann.

Außerdem ist eine Reinigungseinrichtung 20 vorgesehen, die mit wenigstens einer Düse 21 auf die Außenseite der feuerfesten Gehäuseseite 13 gerichtet ist. Damit können auf einfache Weise eventuelle Anbackungen auf dieser Gehäuseseite 13 entfernt werden. Die Düse 21 kann über eine Düsenleitung 22, die durch den Flansch 12 des Gehäuses 7 verläuft, mit einer Spülung 23 beaufschlagt werden. Über dem Flansch 12 vorstehende Anschlüsse 24, 25 können die Düsenleitung 22 bzw. die Zu- und/oder Ableitung 18 mit anderen Verbindungsleitungen, die nicht näher dargestellt sind, verbunden werden.

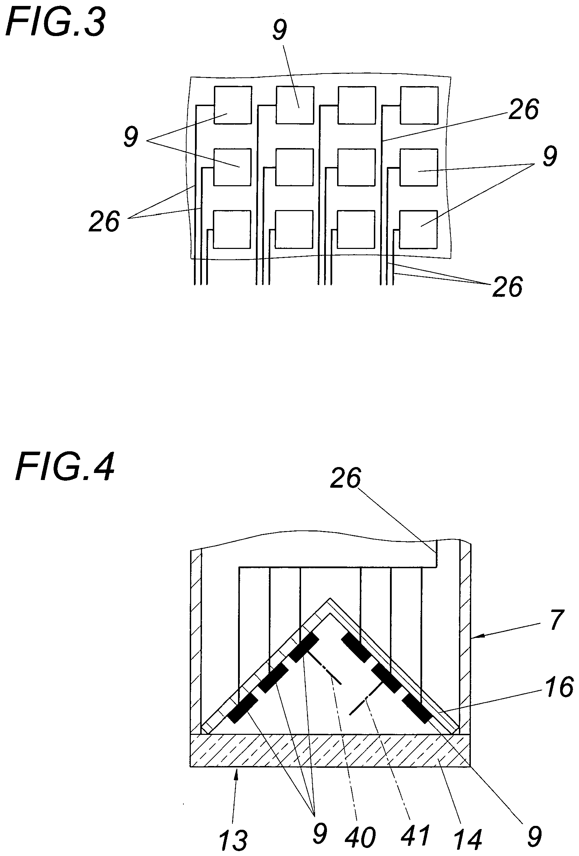

Nach Fig. 3 ist eine aufgerissene Schnittansicht auf die im Wesentlichen ebene Anordnung der Antennen 9 dargestellt. Diese als Patchantennen ausgeführten Antennen 9 sind in einem Array in der Art einer Gruppenantenne angeordnet, wodurch die Apertur noch weiter verbessert werden kann. Über Verbindungsleitungen 26 des Leitungsträgers 16 sind die Antennen 9 mit der nicht dargestellten Ansteuerschaltung 15 verbunden, wobei die Verbindungsleitungen 26 als Bus vereinfacht als eine Leitung dargestellt worden sind.

Eine weitere Anordnung der Antennen 9 ist nach Fig. 4 dargestellt. Hier sind die Antennen 9 auf einem Leitungsträger 16 nebeneinander angeordnet, der zwei zueinander senkrecht verlaufende Teile aufweist. Es sind daher wenigstens zwei Antennen 9 zueinander mit deren Hauptabstrahlrichtungen 40, 41 geneigt angeordnet, was für eine verbesserte Auflösung bei einer Messung des Füllstands 3 sorgen kann. Die Antennen 9 auf dem jeweiligen Teil des Leitungsträgers 16 können jedoch auch, wie in Fig. 3 gezeigt, in einem Array nebeneinander angeordnet sein.

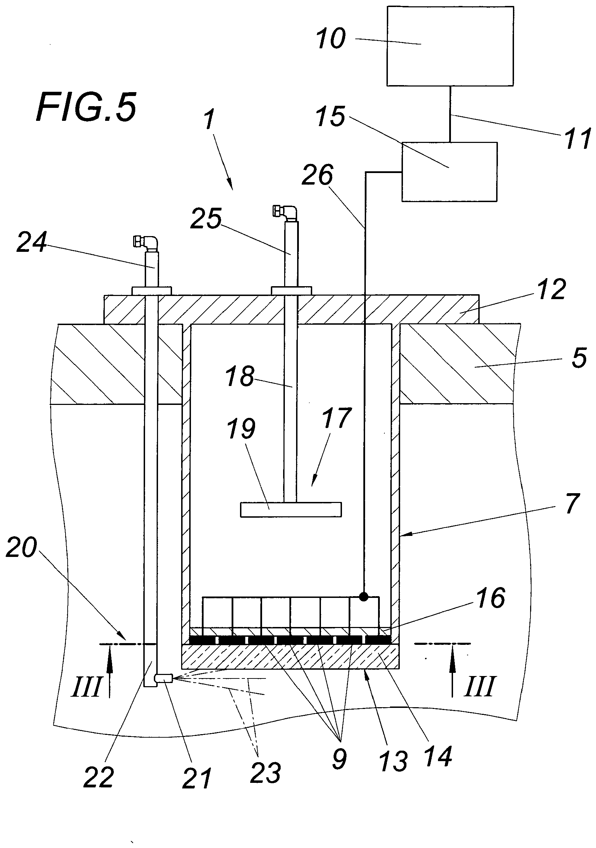

Im Gegensatz zu der nach Fig. 2 dargestellten Radarvorrichtung 1 ist bei der nach Fig. 5 dargestellten zweiten Ausführungsform die Ansteuerschaltung 15 außerhalb des Gehäuses 7 vorgesehen, wodurch Einflüsse des Behälters 2 auf die Ansteuerschaltung 15 vermindert werden können.

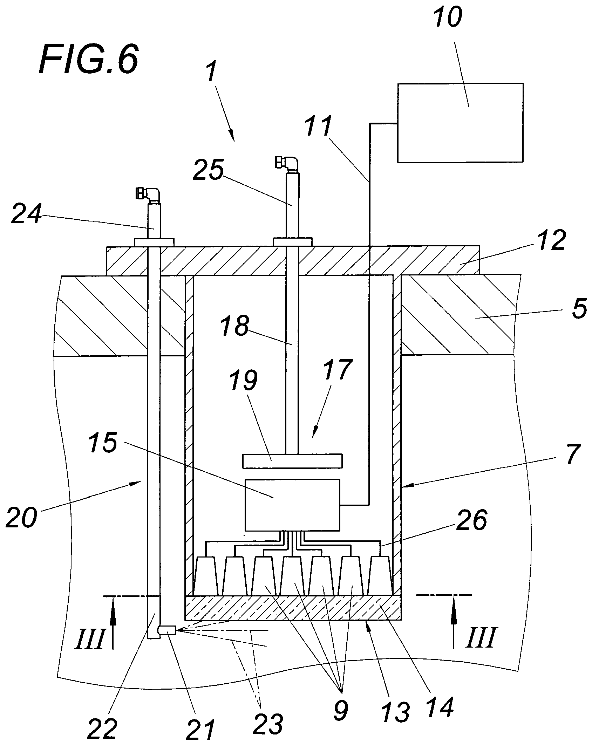

Dem nach Fig. 6 dargestellten dritten Ausführungsbeispiel kann entnommen werden, das als Antennen 9 Hornantennen verwendet werden, wodurch sich auch dieses Ausführungsbeispiel im Wesentlichen vom Ausführungsbeispiel nach Fig. 2 unterscheidet.

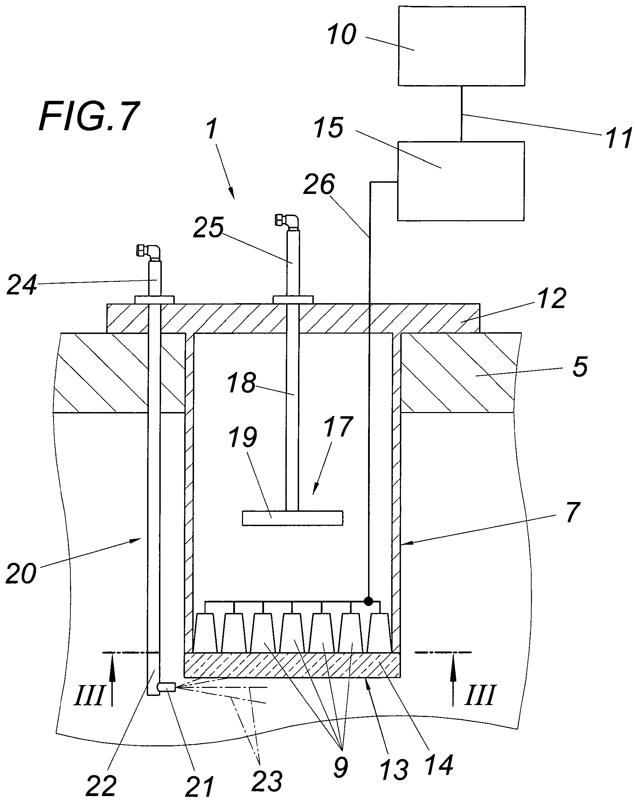

Gemäß dem zuletzt nach Fig. 7 dargestellten Ausführungsbeispiel ist zum Unterschied zum Ausführungsbeispiel nach Fig. 6 die veränderte Lage der Ansteuerschaltung 15 zu entnehmen. Diese ist ähnlich zum Ausführungsbeispiel nach Fig. 5 außerhalb des Gehäuses 7 angeordnet.

Es versteht sich von selbst, dass alle nach den Figuren 5 bis 7 dargestellten Ausführungsbeispiele auch eine Annordnung deren Antennen gemäß den Figuren 3 und 4 aufweisen können.

Nach Fig. 8 wird beispielsweise eine schematische Ansicht der Vorrichtungen nach den Fig. 2, 5, 6, und 7 gezeigt, anhand der das erfindungsgemäße Verfahren näher erläutert wird. So weist die Vorrichtung 1 zur Berechnung einer Oberfläche 3' eines Füllguts 4 eines Behälters 2 eine Antenneneinrichtung 27 auf, die mehrere Antennen 9 zum Senden und Empfangen von Radarsignalen 1' bzw.1" aufweist. Die Antennen 9 sind in einem gemeinsamen Gehäuse 7 angeordnet, wie bereits in den anderen Figuren dargestellt. Wie in Fig. 9 zu entnehmen, reflektieren sich die gesendeten Radarsignale 1' an zumindest zwei verschiedenen Teilbereichen A1 und A2 der Füllgutoberfläche 3'. Mit der Antenneneinrichtung 27 ist eine Recheneinrichtung 28 verbunden, die dann zur Berechnung der Oberfläche 3' des Füllguts 4 aus den, wenigstens von den gesendeten und empfangen elektromagnetischen Signalen 1', 1" abhängigen Daten 29 durchführt. Die Daten 29 sind in einem Speicher 30 vorgesehen, wobei die Recheneinheit 10 auf den Speicher 20 zugreifen kann. Um nun gegenüber bekannten Vorrichtungen trotz geringster Abmessungen der Vorrichtung 1 eine vergleichsweise hohe Genauigkeit in der Berechnung der Oberfläche 3' des Füllguts 4 und/oder des Füllstands 3 ermöglichen zu können, sendet die Antenneneinrichtung 27 Radarsignale 1' je auf alle Teilbereiche A1 bis AN der zu bestimmenden Füllgutoberfläche 3", was der Fig. 9 besser entnommen werden kann. Die Radarsignale 1' reflektieren sich so an den Teilbereichen A1 bis AN, wonach dann die reflektierten Signale 1" wieder empfangen werden. Um für eine hohe Winkelauflösung und Verringerung von Störeinflüssen zu sorgen, bildet die Antenneneinrichtung eine synthetische Apertur aus, was in Fig. 8 näher erläutert wird. Zu diesem Zweck weist die Vorrichtung 1 eine mit den Antennen 9 verbundene Steuereinrichtung 31 auf, die die Antennen zur Bildung einer synthetischen Apertur ansteuert. So ist in Fig. 8 zu erkennen, dass die Steuereinrichtung 31 eine Verbindung zwischen Sender 32 und Antenne 9' herstellt, um ein Radarsignal 1' zu senden. Als Steuereinrichtung 31 kann alternativ auch die Recheneinheit 10 verwendet werden. Der Sender 32 wird beispielsweise von einem Signalgenerator 33 für eine rampenförmige Frequenzmodulation angesteuert. Im Gegensatz zum Sendepfad ist die Antenne 9" mit dem Empfänger 33 verbunden, um so das reflektierte Radarsignal 1" empfangen zu können. Das reflektierte Radarsignal 1" wird weiter einem Mischer 35 zugeführt. Anhand der Mischung des reflektierten Hochfrequenzsignals wird durch Mischung mit dem Lokaloszillatorsignal das Zwischenfrequenzsignal generiert, dass dann einer Analog-Digtal Wandlung mit Hilfe eines AD-Konverter 36 unterworfen wird, um so zur digitalen Speicherung in den Daten 29 dienen zu können. Mit veränderter Ansteuerung der Antennen 9 kann nun durch die Steuereinrichtung 31 eine synthetische Apertur der Antenneneinrichtung 27 ermöglicht werden. Dies ist beispielsweise möglich in dem anstatt der Empfangsantenne 9" eine andere Antennen 9 für den Empfang angesteuert wird. Ebenso ist vorstellbar, dass eine Sendeantenne 9' ein Signal 1' sendet und die anderen Antennen 9 allesamt als Empfangsantennen 9" verwendet werden, so dass für eine Teilfläche A1 eine Vielzahl an empfangenen Signaldaten zur Berechnung zur Verfügung stehen. Außerdem können eine Vielzahl an parallelen Sendeteilen und Empfangsteilen für je eine Antenne 9 vorgesehen sein, was an der Punktierung in Fig. 8 angedeutet ist.

Im allgemeinen kann so erfindungsgemäß eine Art Fokussierung bzw. eine Art Empfangskeule auf die gewünschten Teilflächen berechnet werden, deren Daten für eine genaue Oberflächenberechnung sorgen können, wenn dabei eine synthetische Apertur berücksichtigt wird. Insbesondere wenn von einem Array an Antennen 9 eine Vielzahl an empfangenen elektromagnetischen Signalen 1" für die Berechnung zur Verfügung steht, wie beispielsweise bei einem MIOMO Array, kann so über den Versatz der Antennen für eine besonders hohe Genauigkeit in der Berechnung der Teilflächen A1 bis AN gesorgt werden. Dies ist gerade für eine Verwendung der Vorrichtung 1 in einem Hochofen von Vorteil. weil so trotz des dabei zu erwartenden hohen Reflexionsanteils in den empfangenen Signalen 1" dennoch ein stabiles Verfahren mit einer vergleichsweise hohen Auflösung ermöglicht werden kann. Hinzu kommt, dass durch diese Auflösung besondere Verfahrensbedingungen bei der Berechnung des Randbereichs geschaffen werden können. So ist es nämlich nun möglich, über andere berechnete Teilbereiche Störungen aufgrund von Reflexionen im Randbereich entgegenzuwirken, in dem mit einer Abschätzung des Verlaufs des Füllguts auf Basis der bekannten anderen Teilbereiche Störungen verbessert erkannt werden können.

Eine Darstellung der Rasterung der Oberfläche des Füllguts in Teilflächen ist beispielsweise der Fig. 9 zu entnehmen. Mit Hilfe der in Fig. 8 dargestellten Rasterschaltung 37 der Recheneinheit 28 wird der Raumwinkel, insbesondere Azimut β und/oder Höhenwinkel ε, verändert, um die Teilflächen A1 bis AN aus den vom elektromagnetischen Signal abhängigen Daten berechnen zu können. Dafür verbindet die Rasterschaltung 37 mit der Rechenschaltung 10 der Recheneinheit 28 zur Veränderung wenigstens eines Raumwinkels, wobei dabei auch Abstandsdaten einer Teilfläche A1 bis AN der Oberfläche 3' des Füllguts 4 berechnet werden können. Außerdem weist die Recheneinheit 28 einen Speicher 38 auf, der mit der Recheneinheit 28 zur Übertragung von Daten 39 über die Eigenschaften des Füllguts 4 verbindet. Daher kann die Rechenschaltung 10 in Abhängigkeit der Speicherdaten 39 die vom empfangen elektromagnetischen Signal abhängigen Daten 29 glätten. Über die zu jeder Teilfläche A1 bis AN ermittelten Abstände zu den jeweiligen Punkten P kann außerdem auf einfache Weise der Füllstand 3 eines Behälters 2 berechnet werden.

Weiters ist in der Fig. 2 beispielsweise für alle Ausführungsbeispiele das Gehäuse 7 außen mit einer Beschichtung 42 versehen, die eine Anbackung oder eine Verzunderung am Gehäuse 7 abweisen bzw. verhindern kann. Um hohen Temperatureinflüssen standhalten zu können, ist dafür eine keramische Antihaftbeschichtung denkbar.

## Patentansprüche

1. Verfahren zur Berechnung einer Oberfläche (3') eines Füllguts (4) eines Hochofens (2) bei dem mit Hilfe einer, mehrere in einem gemeinsamen Gehäuse (7) angeordnete Antennen (9) aufweisenden Antenneneinrichtung (27) sowohl wenigstens zwei elektromagnetische Signale (1'), nämlich Radarsignale, auf das Füllgut (4) gesendet werden, welche Signale (1') sich an Teilbereichen (A1 bis AN) der Füllgutoberfläche (3') reflektieren, als auch reflektierte Signale (1") empfangen werden, und bei dem aus wenigstens den, von den gesendeten und empfangenen elektromagnetischen Signalen (1', 1") abhängigen Daten (29) die Oberfläche (3') des Füllguts (4) berechnet wird, **dadurch gekennzeichnet, dass** mit der, über die Antennen (9) eine synthetische Apertur ausbildenden und nicht verschwenkbaren Antenneneinrichtung (27) elektromagnetische Signale (1') gesendet werden, die sich je im Wesentlichen an allen Teilbereichen (A1 bis AN) der zu berechnenden Oberfläche (3') des Füllguts (4) reflektieren.

2. Verfahren nach Anspruch 1, **dadurch gekennzeichnet, dass** die Oberfläche (3') des Füllguts (4) im Wesentlichen aus Teilflächen (A1 bis AN) berechnet wird, die aus wenigstens den Daten (29) unter Berücksichtigung wenigstens einer, zwischen den Teilflächen (A1 bis AN) verschiedenen Raumwinkelgröße (β und/oder ε) bestimmt werden.

3. Verfahren nach Anspruch 1 oder 2, **dadurch gekennzeichnet, dass** zur Berechnung der Oberfläche (3') des Füllguts (4) elektromagnetische Signale (1', 1") von allen Antennen (9) verwendet werden.

4. Verfahren nach Anspruch 1, 2 oder 3, **dadurch gekennzeichnet, dass** zumindest teilweise orthogonal verschiedene oder nacheinander gleiche elektromagnetische Signale (1', 1") gesendet werden.

5. Verfahren nach einem der Ansprüche 1 bis 4, **dadurch gekennzeichnet, dass** für die Berechnung der Oberfläche (3') des Füllguts (4) die Zwischenflächen (Z1 bis ZN) zwischen den berechneten Teilflächen (A1 bis AN) anhand der Daten zu den berechneten Teilflächen (A1 bis AN) interpoliert werden.

6. Verfahren nach einem der Ansprüche 1 bis 5, **dadurch gekennzeichnet, dass** unter Berücksichtigung bekannter physikalischer Eigenschaften des Füllguts (4), insbesondere die maximale Steigung der Oberfläche (3') des Füllguts (4), die von den gesendeten und empfangenen elektromagnetischen Signalen (1', 1") abhängigen Daten (29) geglättet werden.

7. Verfahren nach einem der Ansprüche 1 bis 6, **dadurch gekennzeichnet, dass** die Antennen (9) durch eine feuerfeste, insbesondere gemeinsame Gehäusewand (13) senden und/oder empfangen.

8. Vorrichtung (1) zur Berechnung einer Oberfläche (3') eines Füllguts (4) eines Hochofens (2) mit einer nicht verschwenkbaren Antenneneinrichtung (27), die mehrere, insbesondere nebeneinander in einem Gehäuse (7) angeordnete Antennen (9) zum Senden und Empfangen von elektromagnetischen Signalen (1', 1"), nämlich Radarsignalen, aufweist, die an zumindest zwei verschiedenen Teilbereichen (A1 und A2) der Füllgutoberfläche (3') reflektieren, und mit einer mit der Antenneneinrichtung (27) verbundenen Recheneinrichtung (28) zur Berechnung der Oberfläche (3') des Füllguts (4) aus den, wenigstens von den gesendeten und empfangenen elektromagnetischen Signalen (1', 1") abhängigen Daten (29), **dadurch gekennzeichnet, dass** die Vorrichtung (1) eine mit den Antennen (9) verbundene Steuereinrichtung (31) aufweist, welche ausgebildet ist die Antenneneinrichtung (27) dazu anzusteuern, sich je im Wesentlichen an allen Teilbereichen (A1 bis AN) der zu bestimmenden Füllgutoberfläche (3') reflektierende, elektromagnetische Signale (1') zu senden und welche ausgebildet ist die Antennen (9) zur Bildung einer synthetischen Apertur anzusteuern.

9. Vorrichtung nach Anspruch 8, **dadurch gekennzeichnet, dass** die Recheneinheit (28) eine Rasterschaltung (27) aufweist, die mit der Rechenschaltung (10) der Recheneinheit (28) zur Veränderung wenigstens einer Raumwinkelgröße (β und/oder ε) verbindet, wobei die Rechenschaltung (28) in Abhängigkeit von Raumwinkeln (13 und/oder 8) aus den vom elektromagnetischen Signal (1', 1") abhängigen Daten (29) Abstandsdaten einer Teilfläche (A1 bis AN) der Oberfläche (3') des Füllguts (4) berechnet.

10. Vorrichtung nach Anspruch 8 oder 9, **dadurch gekennzeichnet, dass** die Recheneinheit einen Speicher (38) aufweist, der mit der Rechenschaltung (10) zur Übertragung von Daten (39) über die Eigenschaften des Füllguts (4) verbindet, wobei die Rechenschaltung (10) in Abhängigkeit der Speicherdaten (39) die vom empfangenen elektromagnetischen Signal (1', 1") abhängigen Daten glättet.

11. Vorrichtung nach Anspruch 8, 9 oder 10, **dadurch gekennzeichnet, dass** das Gehäuse (7) eine vor den Antennen (9) vorgesehene, feuerfeste Schicht, insbesondere Gehäuseseite (13), aufweist, die insbesondere Calciumsulfat für eine geringe Dämpfung aufweist und durch die die Antennen (9) senden und/oder empfangen.

12. Vorrichtung nach einem der Ansprüche 8 bis 11, **dadurch gekennzeichnet, dass** mindestens zwei unterschiedliche Abstandsweiten (a, b) zwischen den Antennen (9) vorgesehen sind.

13. Vorrichtung nach einem der Ansprüche 8 bis 12, **dadurch gekennzeichnet, dass** ein Array an Antennen (9), insbesondere ein MIMO, SIMO oder MISO Antennenarray, im Gehäuse (7) vorgesehen ist.

14. Vorrichtung nach einem der Ansprüche 8 bis 13, **dadurch gekennzeichnet, dass** wenigstens zwei Antennen (9) zueinander geneigte Hauptabstrahlrichtungen (40, 41) aufweisen.

15. Hochofen (2) mit einem Füllgut aufnehmenden Ofengehäuse (5) und mit einer in eine Öffnung des Ofengehäuses (5) eingesetzten Vorrichtung (1) nach einem der Ansprüche 8 bis 14.

## Claims

1. Method for calculating a surface (3') of a filling material (4) of a blast furnace (2), in which, by means of an antenna device (27) having a plurality of antennas (9) arranged in a common housing (7), both at least two electromagnetic signals (1'), namely radar signals, are transmitted onto the filling material (4), which signals (1') are reflected at subregions (A1 to AN) of the filling material surface (3'), and reflected signals (1") are received, and in which the surface (3') of the filling material (4) is calculated from at least the data (29) dependent on the transmitted and received electromagnetic signals (1', 1"), **characterized in that**, by means of the antenna device (27), which is non-pivotable and forms a synthetic aperture by way of the antennas (9), electromagnetic signals (1') are transmitted which are each reflected substantially at all subregions (A1 to AN) of the surface (3') of the filling material (4) that is to be calculated.

2. Method according to claim 1, **characterized in that** the surface (3') of the filling material (4) is calculated substantially from subareas (A1 to AN) which are determined from at least the data (29) taking into account at least one solid angle size (β and/or ε) that differs between the subareas (A1 to AN).

3. Method according to claim 1 or 2, **characterized in that** electromagnetic signals (1', 1") from all antennas (9) are used to calculate the surface (3') of the filling material (4).

4. Method according to claim 1, 2 or 3, **characterized in that** different electromagnetic signals (1', 1") are transmitted at least partially orthogonally or identical electromagnetic signals (1', 1") are transmitted one after the other.

5. Method according to any one of claims 1 to 4, **characterized in that**, in order to calculate the surface (3') of the filling material (4), the intermediate areas (Z1 to ZN) between the calculated subareas (A1 to AN) are interpolated on the basis of the data relating to the calculated subareas (A1 to AN).

6. Method according to any one of claims 1 to 5, **characterized in that**, taking into account known physical properties of the filling material (4), more particularly the maximum slope of the surface (3') of the filling material (4), the data (29) dependent on the transmitted and received electromagnetic signals (1', 1") are smoothed.

7. Method according to any one of claims 1 to 6, **characterized in that** the antennas (9) transmit and/or receive through a refractory, more particularly common housing wall (13).

8. Apparatus (1) for calculating a surface (3') of a filling material (4) of a blast furnace (2), comprising a non-pivotable antenna device (27) which has a plurality of antennas (9), more particularly arranged next to one another in a housing (7), for transmitting and receiving electromagnetic signals (1', 1"), namely radar signals, which are reflected at least at two different subregions (A1 and A2) of the filling material surface (3'), and comprising a computing device (28), connected to the antenna device (27), for calculating the surface (3') of the filling material (4) from the data (29) dependent at least on the transmitted and received electromagnetic signals (1', 1"), **characterized in that** the apparatus (1) has a control device (31) connected to the antennas (9), which is designed to actuate the antenna device (27) to transmit electromagnetic signals (1'), which are each reflected substantially at all subregions (A1 to AN) of the filling material surface (3') to be determined, and which is designed to actuate the antennas (9) to form a synthetic aperture.

9. Apparatus according to claim 8, **characterized in that** the computing unit (28) has a raster circuit (27) which connects to the computation circuit (10) of the computing unit (28) in order to change at least one solid angle size (β and/or ε), wherein the computation circuit (28) calculates distance data of a subarea (A1 to AN) of the surface (3') of the filling material (4) from the data (29) dependent on the electromagnetic signal (1', 1") as a function of solid angles (13 and/or 8).

10. Apparatus according to claim 8 or 9, **characterized in that** the computing unit has a memory (38) which connects to the computation circuit (10) in order to transmit data (39) relating to the properties of the filling material (4), wherein the computation circuit (10) smooths the data dependent on the received electromagnetic signal (1', 1") as a function of the memory data (39).

11. Apparatus according to claim 8, 9 or 10, **characterized in that** the housing (7) has a refractory layer provided in front of the antennas (9), more particularly a housing side (13), which more particularly comprises calcium sulphate for low attenuation and through which the antennas (9) transmit and/or receive.

12. Apparatus according to any one of claims 8 to 11, **characterized in that** at least two different distances (a, b) are provided between the antennas (9).

13. Apparatus according to any one of claims 8 to 12, **characterized in that** an array of antennas (9), more particularly a MIMO, SIMO or MISO antenna array, is provided in the housing (7).

14. Apparatus according to any one of claims 8 to 13, **characterized in that** at least two antennas (9) have main emission directions (40, 41) arranged at an angle to one another.

15. Blast furnace (2) comprising a furnace housing (5), which receives a filling material, and comprising an apparatus (1) according to any one of claims 8 to 14, which is inserted into an opening of the furnace housing (5).

## Revendications

1. Procédé pour calculer une surface (3') d'un produit de remplissage (4) d'un haut fourneau (2), dans lequel, à l'aide d'un dispositif d'antennes (27) présentant plusieurs antennes (9) disposées dans un boîtier commun (7), à la fois sont émis sur le produit de remplissage (4) au moins deux signaux électromagnétiques (1'), à savoir des signaux radar qui se réfléchissent sur des zones partielles (A1 à AN) de la surface (3') du produit de remplissage, et sont reçus des signaux réfléchis (1"), et dans lequel la surface (3') du produit de remplissage (4) est calculée à partir d'au moins les données (29) dépendantes des signaux électromagnétiques (1', 1") émis et reçus, **caractérisé en ce que**, par le dispositif d'antennes (27) non pivotant et formant une ouverture synthétique au moyen des antennes (9), sont émis ses signaux électromagnétiques (1') qui se réfléchissent chacun sensiblement sur toutes les zones partielles (A1 à AN) de la surface (3') à calculer du produit de remplissage (4).

2. Procédé selon la revendication 1, **caractérisé en ce que** la surface (3') du produit de remplissage (4) est calculée sensiblement à partir de surfaces partielles (A1 à AN) qui sont déterminées à partir d'au moins les données (29) en tenant compte d'au moins une valeur d'angle solide (β et/ou ε) qui est différente entre les surfaces partielles (A1 à AN).

3. Procédé selon la revendication 1 ou 2, **caractérisé en ce que** les signaux électromagnétiques (1', 1") de toutes les antennes (9) sont utilisés pour calculer la surface (3') du produit de remplissage (4).

4. Procédé selon la revendication 1, 2 ou 3, **caractérisé en ce que** des signaux électromagnétiques (1', 1") différents au moins partiellement orthogonalement ou successivement identiques sont émis.

5. Procédé selon l'une des revendications 1 à 4, **caractérisé en ce que** pour le calcul de la surface (3') du produit de remplissage (4), les surfaces intermédiaires (Z1 à ZN) entre les surfaces partielles calculées (A1 à AN) sont interpolées à partir des données relatives aux surfaces partielles calculées (A1 à AN).

6. Procédé selon l'une des revendications 1 à 5, **caractérisé en ce que** les données (29) dépendantes des signaux électromagnétiques émis et reçus (1', 1") sont lissées en tenant compte de propriétés physiques connues du produit de remplissage (4), en particulier de la pente maximale de la surface (3') du produit de remplissage (4).

7. Procédé selon l'une des revendications 1 à 6, **caractérisé en ce que** les antennes (9) émettent et/ou reçoivent à travers une paroi de boîtier (13) résistante au feu, en particulier commune.

8. Dispositif (1) pour calculer une surface (3') d'un produit de remplissage (4) d'un haut fourneau (2) avec un dispositif d'antennes (27) non pivotant, qui présente plusieurs antennes (9), en particulier disposées les unes à côté des autres dans un boîtier (7), pour l'émission et la réception de signaux électromagnétiques (1', 1"), à savoir de signaux radar, qui se réfléchissent sur au moins deux zones partielles différentes (A1 et A2) de la surface (3') du produit de remplissage, et avec un dispositif de calcul (28) relié au dispositif d'antennes (27) pour calculer la surface (3') du produit de remplissage (4) à partir des données (29) dépendantes au moins des signaux électromagnétiques (1', 1") émis et reçus, **caractérisé en ce que** le dispositif (1) présente un dispositif de commande (31) relié aux antennes (9), qui est conçu pour commander le dispositif d'antennes (27) afin qu'il émette des signaux électromagnétiques (1') se réfléchissant sensiblement sur toutes les zones partielles (A1 à AN) de la surface (3') à déterminer du produit de remplissage et qui est conçu pour commander les antennes (9) afin qu'elles forment une ouverture synthétique.

9. Dispositif selon la revendication 8, **caractérisé en ce que** l'unité de calcul (28) présente un circuit de trame (27) qui est relié au circuit de calcul (10) de l'unité de calcul (28) pour modifier au moins une valeur d'angle solide (β et/ou ε), le circuit de calcul (28) calculant des données de distance d'une surface partielle (A1 à AN) de la surface (3') du produit de remplissage (4) en fonction d'angles solides (13 et/ou 8) à partir des données (29) dépendantes du signal électromagnétique (1', 1").

10. Dispositif selon la revendication 8 ou 9, **caractérisé en ce que** l'unité de calcul présente une mémoire (38) qui est reliée au circuit de calcul (10) pour transmettre des données (39) sur les propriétés du produit de remplissage (4), le circuit de calcul (10) lissant les données dépendantes du signal électromagnétique reçu (1', 1") en fonction des données de mémoire (39).

11. Dispositif selon la revendication 8, 9 ou 10, **caractérisé en ce que** le boîtier (7) présente une couche, en particulier une face de boîtier (13), résistante au feu prévu devant les antennes (9), qui présente en particulier du sulfate de calcium pour une faible atténuation et à travers laquelle les antennes (9) émettent et/ou reçoivent.

12. Dispositif selon l'une des revendications 8 à 11, **caractérisé en ce qu'**au moins deux distances différentes (a, b) sont prévues entre les antennes (9).

13. Dispositif selon l'une des revendications 8 à 12, **caractérisé en ce qu'**un réseau d'antennes (9), en particulier un réseau d'antennes MIMO, SIMO ou MISO, est prévu dans le boîtier (7).

14. Dispositif selon l'une des revendications 8 à 13, **caractérisé en ce qu'**au moins deux antennes (9) présentent des directions principales de rayonnement (40, 41) inclinées l'une par rapport à l'autre.

15. Haut fourneau (2) avec un corps de four (5) recevant un produit de remplissage et avec un dispositif (1) selon l'une des revendications 8 à 14 inséré dans une ouverture du corps de four (5).
